# EUROPEAN PATENT SPECIFICATION

(11) **EP 1 203 045 B1**
(45) Date of publication and mention of the grant of the patent: **04.01.2006**
(21) Application number: 00945236.8
(22) Date of filing: 07.07.2000
(51) Int. Cl.: C08G 65/26, B01J 27/26, C08G 65/32

(54) **POLYMERIZATION OF ALKYLENE OXIDES ONTO FUNCTIONALIZED INITIATORS**
POLYMERISIERUNG VON ALKYLENOXIDEN MIT DER VERWENDUNG VON FUNKTIONALISIERTEN INITIATOREN
POLYMERISATION D'OXYDES D'ALKYLENE SUR DES INITIATEURS FONCTIONNALISES

(30) Priority: 09.07.1999 US 143079 P; 09.07.1999 US 143082 P; 09.07.1999 US 143081 P; 19.05.2000 US 205718 P
(43) Date of publication of application: 08.05.2002
(73) Proprietor: DOW GLOBAL TECHNOLOGIES INC., Midland, Michigan 48674 (US)
(72) Inventor: CLEMENT, Katherine, S., Lake Jackson, TX 77566 (US); WALKER, Louis, L., Clute, TX 77531 (US); WEHMEYER, Richard, M., Lake Jackson, TX 77566 (US); WHITMARSH, Robert, H., Lake Jackson, TX 77566 (US); RAUSCHER, Wanda, W., Angleton, TX 77515 (US)
(74) Representative: Raynor, John
(86) International application number: PCT/US2000/018621
(87) International publication number: WO 2001/004179

(56) References cited:
- EP-A- 0 046 947
- EP-A- 0 485 637
- EP-A- 0 781 791
- WO-A-98/27044
- US-A- 3 660 502
- US-A- 4 537 693
- US-A- 5 347 051

## Description

This invention relates to processes for preparing poly(oxyalkylene) polymers and to methods for preparing same.

Polyethers made from alkylene oxides are well known and useful in a number of applications such as detergent and cleaner compositions, oil well drilling fluids, inks, metal working fluids, lubricants in paper coating compositions, ceramics manufacturing, organic nonionic surfactants and chemical intermediates for organic nonionic surfactants which in turn are used in cosmetics, textiles and chemical processing, polyurethanes which are used as flexible foams, rigid foams and elastomers, manufacturing esters which are used in textile spin finishes, cosmetic agents, and as foam control agents for a wide variety of processes.. These polymers may have no more than one oxyalkylene group in succession, or be a higher molecular weight polymer containing one or more long chains of consecutive oxyalkylene groups.

Polyethers of this type are commonly made through an anionic polymerization process, whereby the alkylene oxide is combined with an initiator compound and a strongly basic catalyst such as potassium hydroxide or certain organic amines is used. The initiator compound contains one or more oxyalkylatable groups such as hydroxyl, thiol, and caryboxylate. The initiator compound determines the functionality (i.e., number of hydroxyl groups/molecule of product) and in some cases may introduce some desired functional group into the product.

There are some disadvantages of polymerizing alkylene oxides using these strongly basic catalysts. Some kinds of initiator compounds cannot be alkoxylated using strongly basic catalysts because they contain base-sensitive functional groups. Examples of these are halogenated initiators and initiators that contain nitro groups. In the presence of strong bases, halogens are removed from haloalcohol compounds. Nitroalcohols react in the presence of strong bases to form a variety of by-products. In particular, nitro alcohols prepared via a Henry or Kamlet reaction or similar condensation of a nitroalkane with a carbonyl compound in the presence of base will undergo a retro reaction to generate the parent nitroalkane and carbonyl compound when exposed to basic conditions. These nitroalkane and carbonyl containing products can then undergo further base catalyzed reactions to form more undesirable by-products.

In order to try to avoid these problems, Lewis acids such as boron trifluoride-diethyl etherate and organic amines such as triethyl amine have been tried. However, some of these catalysts tend to promote the formation of large amounts of by-products, especially when it is attempted to add three or more moles of alkylene oxide per equivalent of initiator compound. The Lewis acid catalysts tend to catalyze "back-biting" reactions where the growing polymer chain reacts with itself. The reactions form cyclic ethers such as dioxane, substituted dioxane and various crown ethers. These cannot be removed easily from the desired product, and so the product cannot be used in many applications.

Thus, it would be desirable to provide a method whereby polyethers made using halogenated or nitro-containing initiator compounds could be produced in good yield with low levels of by-products.

In one aspect, this invention is a process for preparing a polyether having one or more halogen, aldehyde, ketone or nitro groups, comprising forming a mixture of a halogenated, aldehyde-containing, ketone-containing or nitro-containing initiator compound having one or one oxyalkylatable groups, at least one alkylene oxide and a metal cyanide catalyst complex, and subjecting the mixture to conditions sufficient to activate the catalyst complex and to alkoxylate the oxyalkylatable groups of the initiator.

In a second aspect, this invention is a poly(alkylene oxide) polymer containing the residue of an initiator compound containing at least one halogen, aldehyde, or nitro group, the polymer having an average alkoxy degree of polymerization of at least three moles of alkylene oxide per equivalent of initiator compound.

This invention permits the ready formation of polymers of initiators containing halogen, aldehyde, ketone or nitro substituents that do not survive base-catalyzed alkoxylation processes. The crude polymers made by this invention do no contain significant levels of undesirable by-products such as nitroalkanes, carbonyl compounds, cyclic ethers and other impurities.

The polyether products of this process contain one or more terminal hydroxyl groups and at least one halogen, aldehyde, ketone or nitro group. The halogen, aldehyde, ketone or nitro functionality provides a useful reactive site on the polyether through which various types of substituents can be formed. Of principal interest is the creation of amine functionality on the polyether to form a product having both hydroxyl and amine groups.

Thus, in additional aspects this invention includes processes for making polyethers that are both amine and hydroxyl-substituted. One of these processes comprises forming a mixture of a halogenated initiator compound having one or one oxyalkylatable groups, at least one alkylene oxide and a metal cyanide catalyst complex and subjecting the mixture to conditions sufficient to activate the catalyst complex and to alkoxylate the oxyalkylatable groups of the initiator to form a polyether containing at least one halogen group and at least one hydroxyl group, and then contacting said polyether with ammonia, a primary amine or a secondary amine under conditions sufficient to replace said halogen group with an amine group.

Similarly, another such process comprises forming a mixture of a nitro-containing initiator compound having one or one oxyalkylatable groups, at least one alkylene oxide and a metal cyanide catalyst complex and subjecting the mixture to conditions sufficient to activate the catalyst complex and to alkoxylate the oxyalkylatable groups of the initiator to form a polyether containing at least one nitro group and at least one hydroxyl group, and then subjecting said polyether to conditions sufficient to reduce said nitro group to an amine group.

In this invention, certain initiator compounds are alkoxylated by reaction with one or more alkylene oxides in the presence of a catalytically effective amount of a metal cyanide catalyst. The alkoxylation is conducted by combining the initiator, metal cyanide catalyst and alkylene oxide. The catalyst is then allowed to become activated in the presence of the alkylene oxide. Once the catalyst has become activated, the mixture is subjected to conditions sufficient to polymerize the alkylene oxide. In this manner, the initiator compound becomes alkoxylated until poly(oxyalkylene) chains of a desired length are introduced. As discussed below, once polymerization has begun, other types of monomers that are copolymerizable with alkylene oxides can be polymerized as well.

The initiator used in one aspect of the invention herein contains at least one hydroxyl group that is bound to an aliphatic carbon atom and capable of being alkoxylated. The initiator also contains at least one halogen, aldehyde, saturated ester, ketone or nitro (-NO₂) group, either of which can be bound to either an aliphatic or aromatic carbon atom. Halogen groups include fluorine, chlorine, bromine and iodine, with chlorine and bromine being preferred. The initiator may contain other functional groups as well, provided that they do not react in an undesirable way under the conditions of the alkoxylation reaction.Suitable halogenated alcohols include 2-chloroethanol, 2-bromoethanol, 2-chloro-1-propanol, 3-chloro-1-propanol, 3-bromo-1-propanol, 1,3-dichloro-2-propanol, 1-chloro-2-methyl-2-propanol, 3-chloro-2,2-dimethyl-1-propanol, 3-bromo-2,2-dimethyl-1-propanol, 4-chloro-1-butanol, 6-chloro-1-hexanol, 6-bromo-1-hexanol, 3-bromo-2-methyl-1-propanol, 7-bromo-1-heptanol, 8-chloro-1-octanol, 8-bromo-1-octanol, 2,2-dichloroethanol, 2,3-dibromopropanol, 2,2-bis(chloromethyl)-1-propanol, 2,2,2-tribromoethanol, 2,2,2-trichloroethanol, 2,2,2-trifluoroethanol, 2,2,3,3-tetrafluoro-1-propanol, 1-chloro-2-propanol, 1-bromo-2-propanol, 1,3-difluoro-2-propanol, 1,3-dibromo-2-propanol, 1,4-dibromo-2-butanol, 3-chloro-1,2-propanediol, 3-bromo-1,2-propanediol, 2-chloro-2-propene-1-ol, 2-chlorocyclohexanol, alpha-(chloromethyl)2,4-dichlorobenzyl alcohol, and trans-2,3-dibromo-2-butene-1,4-diol. Suitable ketone-containing groups include acetol. Suitable nitro alcohols include 2-nito-2-methyl-1-propanol, 2-nitroethanol, 2-nitro-1-propanol, 3-nitro-2-butanol, 3-nitro-2-pentanol, 2-bromo-2-nitro-1,3-propanediol, nitromethane trispropanol, and tri(hydroxymethyl)nitromethane.

The alkoxylation is performed by first mixing the initiator, catalyst and an alkylene oxide and allowing the mixture to sit for a period of time at room or an elevated temperature. When these materials are mixed, a so-called induction period occurs, during which the oxyalkylation reaction occurs very slowly. The induction period may range from a few minutes to several hours, depending on the particular catalyst that is used and the temperature. During this induction period, the catalyst becomes activated, and rapid polymerization of the alkylene oxide then commences.

The starting mixture of catalyst, initiator compound and alkylene oxide is conveniently made by combining the catalyst and initiator compound in a pressure reactor (or by forming the catalyst in the initiator), and then pressurizing the reactor with an initial quantity of alkylene oxide. The induction period follows, as indicated by a nearly constant or slowly decreasing pressure in the reactor. The onset of rapid polymerization that follows the induction period is evidenced by a drop in pressure as the alkylene oxide is consumed.

For halogenated initiators, the starting mixture of catalyst, initiator compound and alkylene oxide may be brought to any convenient temperature, such as from about 20°C, preferably from about 50°C, more preferably from about 70°C, even more preferably from about 80°C to about 150°C, preferably to about 130°C. These temperatures are also suitable for conducting the polymerization once the catalyst is activated. Somewhat lower temperatures are preferred when nitro-substituted initiators are used.

Depending on the desired degree of alkoxylation, all the necessary alkylene oxide may be added to the reactor at the outset. It is usually preferred to add more alkylene oxide to the reactor once the catalyst has become activated, especially when making higher molecular weight polyethers. A convenient way of adding the alkylene oxide is to pressurize the reactor with alkylene oxide and allow alkylene oxide to feed to the reactor on demand, maintaining a more or less constant pressure inside the reactor. Alternatively, any additional alkylene oxide may be fed in one or more discrete increments.

The total amount of alkylene oxide that is fed will depend on the desired equivalent weight of the product. As few as one mole of alkylene oxide per equivalent of initiator compound can be added. This invention is particularly suited for polymerizing at least about 3 moles of alkylene oxide per equivalent of initiator compound. Sufficient alkylene oxide can be added to make any desirable molecular weight polyether, such as one having a weight average molecular weight of 200,000 daltons or more. However, in most cases the intended end-use of the product will dictate its molecular or equivalent weight. For surfactant applications, molecular weights of from about 350 to about 6000 are of particular interest. In many applications, it is desirable that the product be a liquid. Poly(oxyethylene) homopolymers tend to form solids when their weight average molecular weights exceed about 700 daltons. Thus, when a poly(ethylene oxide) homopolymer is made in accordance with the invention, preferred molecular weights are about 1000 or below. All weights reported above are number average molecular weights.

Similarly, the selection of alkylene oxide will depend to a large extent on the intended end-use of the product. Among the alkylene oxides that can be polymerized with the catalyst complex of the invention are ethylene oxide, propylene oxide, 1,2-butylene oxide, styrene oxide, and mixtures thereof. Mixtures of these can be used, and two or more of them can be polymerized sequentially to make block copolymers. For polyurethanes applications, preferred alkylene oxides are propylene oxide alone, mixtures of at least 50 weight % propylene oxide and up to about 50 weight % ethylene oxide (to form a random copolymer), and propylene oxide followed by ethylene oxide, so as to form terminal poly(oxyethylene) chains constituting up to about 30% of the total weight of the product. For other applications, ethylene oxide alone, 1,2-butylene oxide, ethylene oxide/1,2-butylene oxide mixtures, ethylene oxide followed by propylene oxide or butylene oxide, butylene oxide followed by ethylene and/or propylene oxide, propylene oxide alone, mixtures of propylene oxide and ethylene and/or butylene oxide, and propylene oxide followed by ethylene and/or butylene oxide are preferred alkylene oxides.

In addition, monomers that will copolymerize with the alkylene oxide in the presence of the catalyst complex can be used to prepare modified polyether polyols, after the catalyst has become activated. Such comonomers include oxetanes as described in U. S. Patent Nos. 3,278,457 and 3,404,109 and anhydrides as described in U. S. Patent Nos. 5,145,883 and 3,538,043, which yield polyethers and polyester or polyetherester polyols, respectively. Lactones as described in U. S. Patent No. 5,525,702 and carbon dioxide are examples of other suitable monomers that can be polymerized with the catalyst of the invention.

The polymerization reaction may be performed continuously or batchwise. In such continuous processes, initiator, catalyst and alkylene oxide are continuously fed into a continuous reactor such as a continuously stirred tank reactor (CSTR) or a tubular reactor. The product continuously removed.

The concentration of the catalyst is selected to polymerize the alkylene oxide at a desired rate or within a desired period of time. Generally, a suitable amount of catalyst is from about 5 to about 10,000 parts by weight metal cyanide catalyst complex per million parts of the product. For determining the amount of catalyst complex to use, the weight of the product is generally considered to equal the combined weight of alkylene oxide and initiator, plus any comonomers that may be used. More preferred catalyst complex levels are from about 10, especially from about 25, to about 5000, more preferably about 1000 ppm, most preferably about 100 ppm, on the same basis.

The metal cyanide catalyst can be represented by the general formula:

M_{b}[M¹(CN)ᵣ(X)ₜ]_{c}[M²(X)₆]_{d} • zL • nM³ₓA_{y},

wherein M is a metal ion that forms an insoluble precipitate with the M¹(CN)ᵣ(X)ₜ group and which has at least one water soluble salt;
M¹ and M² are transition metal ions that may be the same or different;
each X independently represents a group other than cyanide that coordinates with an M¹ or M² ion;
L represents an organic complexing agent;
M³ₓA_{y} represents a water-soluble salt of metal ion M³ and anion A, wherein M³ is the same as or different than M;
b and c are positive numbers that, together with d, reflect an electrostatically neutral complex;
d is zero or a positive number;
x and y are numbers that reflect an electrostatically neutral salt;
r is from 4 to 6; t is from 0 to 2;
z is zero or a positive number and n is a positive number indicating the relative quantities of the complexing agent and MₓA_{y}, respectively. z and n may be fractions.

The X groups in any M²(X)₆ do not have to be all the same. The molar ratio of c:d is advantageously from about 100:0 to about 20:80, more preferably from about 100:0 to about 50:50, and even more preferably from about 100:0 to about 80:20.

Similarly, the catalyst may contain two or more types of M¹(CN)ᵣ(X)ₜ groups and two or more types of M²(X)₆ groups.

M and M³ are preferably metal ions selected from the group consisting of Zn⁺², Fe⁺², Co⁺², Ni⁺², Mo⁺⁴, Mo⁺⁶, Al⁺³, V⁺⁴, V⁺⁵, Sr⁺², W⁺⁴, W⁺⁶, Mn⁺², Sn⁺², Sn⁺⁴, Pb⁺², Cu⁺², La⁺³ and Cr⁺³. M and M³ are more preferably Zn⁺², Fe⁺², Co⁺², Ni⁺², La⁺³ and Cr⁺³. M is most preferably Zn⁺².

Suitable anions A include halides such as chloride and bromide, nitrate, sulfate, carbonate, cyanide, oxalate, thiocyanate, isocyanate, perchlorate, isothiocyanate, and a C₁₋₄ carboxylate. Chloride ion is especially preferred.

M¹ and M² are preferably Fe⁺³, Fe⁺², Co⁺³, Co⁺², Cr⁺², Cr⁺³, Mn⁺², Mn⁺³, Ir⁺³, Ni⁺², Rh⁺³, Ru⁺², V⁺⁴ and V⁺⁵. Among the foregoing, those in the plus-three oxidation state are more preferred. Co⁺³ and Fe⁺³ are even more preferred and Co⁺³ is most preferred.

Preferred groups X include anions such as halide (especially chloride), hydroxide, sulfate, C₁₋₄ carbonate, oxalate, thiocyanate, isocyanate, isothiocyanate, C₁₋₄ carboxylate and nitrite (NO₂⁻), and uncharged species such as CO, H₂O and NO. Particularly preferred groups X are NO, NO₂⁻ and CO.

The catalyst is usually complexed with an organic complexing agent. A great number of complexing agents are potentially useful, although catalyst activity may vary according to the selection of a particular complexing agent. Examples of such complexing agents include alcohols, aldehydes, ketones, ethers, amides, nitriles, and sulfides.

Suitable alcohols include monoalcohols and polyalcohols. Suitable monoalcohols include methanol, ethanol, n-propanol, isopropanol, n-butanol, isobutanol, t-butanol, octanol, octadecanol, 3-butyn-1-ol, 3-butene-1-ol, propargyl alcohol, 2-methyl-2-propanol, 2-methyl-3-butyn-2-ol, 2-methyl-3-butene-2-ol, 3-butyn-1-ol, 3-butene-1-ol, and 1-t-butoxy-2-propanol. Suitable monoalcohols also include halogenated alcohols such as 2-chloroethanol, 2-bromoethanol, 2-chloro-1-propanol, 3-chloro-1-propanol, 3-bromo-1-propanol, 1,3-dichloro-2-propanol, 1-chloro-2-methyl-2-propanol as well as nitroalcohols, keto-alcohols, ester-alcohols, cyanoalcohols, and other inertly substituted alcohols.

Suitable polyalcohols include ethylene glycol, propylene glycol, glycerine, 1,1,1-trimethylol propane, 1,1,1-trimethylol ethane, 1,2,3-trihydroxybutane, pentaerythritol, xylitol, arabitol, mannitol, 2,5-dimethyl-3-hexyn-2,5-diol, 2,4,7,9-tetramethyl-5-decyne-4,7-diol, sucrose, sorbitol, alkyl glucosides such as methyl glucoside and ethyl glucoside. Low molecular weight polyether polyols, particular those having an equivalent weight of about 350 or less, more preferably about 125-250, are also useful complexing agents.

Suitable aldehydes include formaldehyde, acetaldehyde, butyraldehyde, valeric aldehyde, glyoxal, benzaldehyde, and toluic aldehyde. Suitable ketones include acetone, methyl ethyl ketone, 3-pentanone, and 2-hexanone.

Suitable ethers include cyclic ethers such as dioxane, trioxymethylene and paraformaldehyde as well as acyclic ethers such as diethyl ether, 1-ethoxy pentane, bis(betachloro ethyl) ether, methyl propyl ether, diethoxy methane, dialkyl ethers of alkylene or polyalkylene glycols (such as ethylene glycol dimethyl ether, diethylene glycol dimethyl ether, triethylene glycol dimethyl ether and octaethylene glycol dimethyl ether).

Amides such as formamide, acetamide, propionamide, butyramide and valeramide are useful complexing agents. Esters such as amyl formate, ethyl formate, hexyl formate, propyl formate, ethyl acetate, methyl acetate, and triethylene glycol diacetate can be used as well. Suitable nitriles include acetonitrile, and proprionitrile. Suitable sulfides include dimethyl sulfide, diethyl sulfide, dibutyl sulfide, and diamyl sulfide.

Preferred complexing agents are t-butanol, 1-t-butoxy-2-propanol, polyether polyols having an equivalent weight of about 75-350 and dialkyl ethers of alkylene and polyalkylene glycols. Especially preferred complexing agents are t-butanol, 1-t-butoxy-2-propanol, polyether polyols having an equivalent weight of 125-250 and a dimethyl ether of mono-, di- or triethylene glycol, t-Butanol and glyme (1,2-dimethoxy ethane) are especially preferred.

A silane-functional complexing agent, as described in the copending application of Wehmeyer, application no. 09/574,842 entitled Method for Preparing Metal Cyanide Catalysts using Silane-functional Ligands, filed May 19, 2000, may be used instead of or in addition to the aforementioned complexing agents. As described therein, the silane-functional complexing agent may be polymerized to form a film or polymer, optionally on a support, or may function as a coupling agent to attach the catalyst complex to a support material.

In addition, the catalyst complex often contains a quantity of water that is bound into the crystalline lattice of the complex. Although the amount of bound water is difficult to determine, it is believed that this amount is typically from about 0.25 to about 3 moles of water per mole of M¹ and M² ions.

Exemplary catalysts include:

Zinc hexacyanocobaltate • zL • aH₂O • nZnCl₂;

Zn[Co(CN)₅NO] • zL • aH₂O • nZnCl₂;

Znₛ[Co(CN)₆]ₒ[Fe(CN)₅NO]ₚ • zL • aH₂O • nZnCl₂ (o, p = positive numbers, s=1.5o + p);

Znₛ[Co(CN)₆]ₒ[Co(NO₂)₆]ₚ[Fe(CN)₅NO]_{q} • zL • aH₂O • nZnCl₂ (o, p, q = positive numbers, s=1.5(o+p)+q);

Zinc hexacyanocobaltate • zL • aH₂O • nLaCl₃;

Zn[Co(CN)₅NO] • zL • aH₂O • nLaCl₃;

Zn[Co(CN)₆]ₒ[Fe(CN)₅NO]ₚ • zL • aH₂O • nLaCl₃ (o, p = positive numbers, s=1.5o + p);

Znₛ[Co(CN)₆]ₒ[Co(NO₂)₆]ₚ[Fe(CN)₅NO]_{q} • zL • aH₂O • nLaCl₃ (o, p, q = positive numbers, s=1.5(o+p)+q);

Zinc hexacyanocobaltate • zL • aH₂O • nCrCl₃;

Zn[Co(CN)₅NO] • zL • aH₂O • nCrCl₃;

Znₛ[Co(CN)₆]ₒ[Fe(CN)₅NO]ₚ • zL • aH₂O • nCrCl₃ (o, p = positive numbers, s=1.5o + p);

Znₛ[Co(CN)₆]ₒ[Co(NO₂)₆]ₚ[Fe(CN)₅NO]_{q} • zL • aH₂O • nCrCl₃ (o, p, q = positive numbers, s=1.5(o+p)+q);

Magnesium hexacyanocobaltate • zL • aH₂O • nZnCl₂;

Mg[Co(CN)₅NO] • zL • aH₂O • nZnCl₂;

Mgₛ[Co(CN)₆]ₒ[Fe(CN)₅NO]ₚ • zL • aH₂O • nZnCl₂ (o, p = positive numbers,s=1.5o + p);

Mgₛ[Co(CN)₆]ₒ[Co(NO₂)₆]ₚ[Fe(CN)₅NO]_{q}• zL • aH₂O • nZnCl₂ (o, p, q = positive numbers, s=1.5(o+p)+q);

Magnesium hexacyanocobaltate • zL • aH₂O • nLaCl₃;

Mg[Co(CN)₅NO]• zL • aH₂O • nLaCl₃;

Mgₛ[Co(CN)₆]ₒ[Fe(CN)₅NO]ₚ•zL • aH₂O • nLaCl₃ (O, p = positive numbers, s=1.5o + p);

Mgₛ[Co(CN)₆]ₒ[Co(NO₂)₆]ₚ[Fe(CN)₅NO]_{q} • zL • aH₂O • nLaCl₃ (o, p, q = positive numbers, s=1.5(o+p)+q);

Magnesium hexacyanocobaltate • zL • aH₂O • nCrCl₃;

Mg[Co(CN)₅NO] • zL • aH₂O • nCrCl₃;

Mgₛ[Co(CN)₆]ₒ[Fe(CN)₅NO]ₚ • zL • aH₂O • ncrcl₃ (o, p = positive numbers, s=1.5o + p);

Mgₛ[Co(CN)₆]ₒ[Co(NO₂)₆]ₚ[Fe(CN)₅NO]_{q} • zL • aH₂O • nCrCl₃ (o, p, q = positive numbers, s=1.5(o+p)+q);

as well as the various complexes such as are described at column 3 of U. S. Patent No. 3,404,109.

The catalyst complex may be supported. One method of making a supported catalyst is by precipitating the catalyst in the presence of a polycarboxyl or polycarboxylate compound, as described in copending application of Wehmeyer, application no. 09/574,848, entitled Method for Preparing Metal Cyanide Catalysts using Polycarboxylic Acids, filed May 19, 2000. Supported catalysts as described in WO 99/44379 are also useful. In addition, supported catalysts can be prepared as described in the copending application of Wehmeyer, application no. 09/574,843 entitled Metal Cyanide Catalysts on Inorganic Supports, filed May 19, 2000.

The catalyst complex is conveniently made using standard precipitation methods as are described, for example, in U. S. Patent Nos. 3,278,457, 3,278,458, 3,278,459, 3,404,109, 3,427,256, 3,427,334, 3,427,335, 5,470,813, 5,482,908, 5,536,883, 5,589,431, 5,627,120, 5,627,122, 5,639,705, 5,714,428, 5,731,407, 5,780,584, 5,783,513. In addition, the catalyst may be formed directly as a dispersion in an initiator compound, as described in copending application of Wehmeyer, application no. 09/574,847, entitled Method for Preparing Metal Cyanide Catalyst/Polyol Initiator Slurries filed May 19, 2000, or through an incipient wetness technique as described in the copending application of Molzahn et al, U. S. Serial No. 09/574,844, entitled Incipient Wetness Method for Making Metal-Containing Cyanide Catalysts, filed May 19, 2000.

The product polyether is typically prepared in good yield with only small amounts of undesired by-products. In some instances, the product may contain a high molecular weight fraction that has a weight average molecular weight of 1.5X or more of that of the desired product. Typically, when this fraction is present, it constitutes about 20% or less, more typically less than about 10% of the total weight of the product.

Other than the high molecular weight fraction, the process of the invention permits the alkoxylation of halogenated and nitro-substituted initiator compounds with the formation of few by-products. By-products other than unreacted starting materials and the high molecular weight fraction typically constitute less than about 10% by weight of the product, more typically less than about 5 weight percent and even more typically less than about 2 weight percent, prior to any clean-up or purification. The product polyether is also generally characterized by having a good polydispersity, typically less than about 2.0, more typically less than about 1.25 and preferably less than about 1.05.

The product polyether contains at least one hydroxyl group and one or more halogen or nitro groups. The halogen and nitro groups can be reacted with various reagents to introduce various types of functionality onto the polyether. Among these reactions, amination is of particular interest. Halogen atoms on the polyether can be reacted with ammonia, a primary amine or a secondary amine to introduce the corresponding amino group (-NH₂, -NHR or -NR₂, respectively, where R is alkyl or aryl that may be substituted). Nitro groups are easily reduced using a variety of hydrogen sources, including gaseous hydrogen over a metal catalyst, hydrochloric acid over an iron catalyst, and hydrides such as lithium aluminum hydride

The following examples are provided to illustrate the invention, but are not intended to limit its scope. All parts and percentages are by weight unless otherwise indicated.

### Example 1

1,3-Dichloro-2-propanol (0.1121 g) and 6.2 mg of a zinc hexacyanocobaltate/t-butanol catalyst complex that has been treated with a 450 molecular weight poly(propylene oxide) triol are charged into a dried Wheaton vial fitted with a stir bar. The vial is sealed with a septum cap and purged with nitrogen. About 0.5 g of ethylene oxide are added by syringe and the septum cap is replaced with a solid cap under nitrogen. The vial is sealed and at 90°C for 14 hours. The product has an Mₙ of 690 and a polydispersity of 1.22. C¹³ NMR analysis is consistent with the chloro functionality remaining intact. The peaks attributable to the carbon atoms of the initiator residue are shifted slightly from the corresponding carbon absorptions of the initiator, indicating that the 1,3-dichloro-2-propanol has initiated the polymerization.

### Example 2

2-chloroethanol (0.1161 g) and 6.3 mg of a zinc hexacyanocobaltate/t-butanol catalyst complex that has been treated with a 450 molecular weight poly(propylene oxide) triol are charged into dried Wheaton vial fitted with a stir bar. The vial is sealed with a septum cap and purged with nitrogen. About 0.5 g of ethylene oxide are added by syringe and the septum cap is replaced with a solid cap under nitrogen. The vial is sealed and at 90°C for 14 hours. The product has an Mₙ of 530 and a polydispersity of 1.26. C¹³ NMR analysis is consistent with the chloro functionality remaining intact. The peaks attributable to the carbon atoms of the initiator residue are shifted slightly from the corresponding carbon absorptions of the initiator, indicating that the 2-chloro-ethanol has initiated the polymerization.

### Example 3

A zinc hexacyanocobaltate/t-butanol/450 MW poly(propylene oxide) triol catalyst complex (5.94 g) and 258.84 g of 1,3-dichloro-2-propanol are homogenized and charged to a 2 gallon reactor, taking care to transfer all of the catalyst complex into the reactor. The reactor is sealed and degassed/purged several times with nitrogen, with the pressure being maintained above atmospheric pressure at all times to prevent loss of initiator. The mixture is stirred and heated to 90°C. A portion of ethylene oxide (85 g) is added. The mixture is heated and stirred. A small pressure drop is observed after about 20 minutes. Two hours after the initial addition of ethylene oxide, an additional 65 g of ethylene oxide is added. Another 515 g of ethylene oxide are then fed upon demand. The product is a yellow liquid that becomes opaque but remains liquid as it cools to room temperature. The Mₙ of the product is 310, and the polydispersity is 1.16. NMR analysis shows that the ethylene oxide has added onto the initiator.

### Example 4

2-Methyl-2-nitro-1-propanol (0.1798 g) and 2 mg of a zinc hexacyanocobaltate/t-butanol catalyst complex that has been treated with a 450 molecular weight poly(propylene oxide) triol are charged into dried Wheaton vial fitted with a stir bar. The vial is sealed with a septum cap and purged with nitrogen. About 0.5 g of ethylene oxide is added by syringe and the septum cap is replaced with a solid cap under nitrogen. The vial is sealed and heated and stirred at 90°C for 14 hours. C¹³ NMR analysis is consistent with the nitro functionality remaining intact. The peaks attributable to the carbon atoms of the initiator in the polyol are shifted from the corresponding carbon absorptions in the starting initiator, indicating that the 2-methyl-2-nitro-1-propanol has initiated the polymerization.

### Example 5

3'-Hydroxyacetophenone (0.2005 g) and 3.7 mg of a zinc hexacyanocobaltate/t-butanol catalyst complex that has been treated with a 450 molecular weight poly(propylene oxide) triol are charged into dried Wheaton vial fitted with a stir bar. The vial is sealed with a septum cap and purged with nitrogen. About 0.5 g of ethylene oxide is added by syringe and the septum cap is replaced with a solid cap under nitrogen. The vial is sealed and heated and stirred at 90°C for 14 hours. C¹³ NMR analysis is consistent with the ketone functionality remaining intact. The peaks attributable to the carbon atoms of the initiator in the polyol are shifted from the corresponding carbon absorptions in the starting initiator, indicating that the 3'-hydroxyacetophenone has initiated the polymerization.

### Example 6

Acetol (0.1149 g) and 3.1 mg of a zinc hexacyanocobaltate/t-butanol catalyst complex that has been treated with a 450 molecular weight poly(propylene oxide) triol are charged into dried Wheaton vial fitted with a stir bar. The vial is sealed with a septum cap and purged with nitrogen. About 0.5 g of ethylene oxide is added by syringe and the septum cap is replaced with a solid cap under nitrogen. The vial is sealed and heated and stirred at 90°C for 14 hours. C¹³ NMR analysis is consistent with the ketone functionality remaining intact. The peaks attributable to the carbon atoms of the initiator in the polyol are shifted from the corresponding carbon absorptions in the starting initiator, indicating that the acetol has initiated the polymerization.

### Example 7

A monofunctional poly(ethylene oxide) is made by polymerizing 665 parts ethylene oxide onto 258.84 parts of 1,3-dichloro-2-propanol in the presence of about 6389 ppm of a zinc hexacyanocobaltate/H₂O/t-butanol catalyst complex. This corresponds to about 700 ppm Co and 1725 ppm Zn, based on the weight of the crude product to form a crude polyether. The crude product has a number average molecular weight of 310 and a polydispersity of 1.16. It contains a high molecular weight fraction constituting about 2.64% by weight of the product.

One part of the crude poly(ethylene oxide) is slurried into about two parts of isopropyl alcohol and stirred at room temperature. The liquid low molecular weight fraction mixes immediately into the solvent. About one part of n-hexane is then added, again at room temperature and the resulting mixture is stirred briefly. The mixture separates into a liquid phase and a solid phase. The solid phase is removed by vacuum filtering the mixture through filter paper and a one inch pad of a filtering aid (diatomaceous earth). The retained solids are washed with a portion of a 1:2 mixture of hexane and isopropanol. The filtered solution is then concentrated by rotary evaporation to yield the low molecular weight poly(ethylene oxide) product (about 96% recovery). The waxy solid retained on the filter bed (2.6% by weight of the total) consists of a 7400 Mₙ, 1.22 polydispersity poly(ethylene oxide) containing substantially all of the catalyst and only a small amount of entrained low molecular weight poly(ethylene oxide).

Ten grams of the low molecular weight chloro-functionalized poly(ethylene oxide) product is combined with 70 mL of 2.0 Molar ammonia in isopropyl alcohol. The mixture is stirred and heated to 90°C in a closed vessel overnight. Substitution of the chloro groups by the amine groups is evidenced by the precipitation of ammonium chloride. C¹³ NMR analysis is consistent with substitution of the chloro groups by amine functionality.

### Example 8

One gram of the chloro-functionalized poly(ethylene oxide)product of Example 7 is combined with 2.0 g of 1,3-propylenediamine and stirred and heated to 90°C in a closed vessel overnight. The product is isolated by dilution with isopropyl alcohol, filtration of the precipitated hydrochloride salt and rotary evaporation of the resulting solution. C¹³NMR analysis is consistent with substitution of the chloro groups by amine functionality.

### Example 9 (Not inventive)

Ethyl 3-hydroxybutyrate (0.1984 g) and 2 mg of a zinc hexacyanocobaltate/t-butanol catalyst complex that has been treated with a 450 molecular weight poly(propylene oxide) triol are charged into dried Wheaton vial fitted with a stir bar. The vial is sealed with a septum cap and purged with nitrogen. About 0.5 g of ethylene oxide is added by syringe and the septum cap is replaced with a solid cap under nitrogen. The vial is sealed and heated and stirred at 90°C for 14 hours. C¹³ NMR analysis is consistent with the ester functionality remaining intact. The peaks attributable to the carbon atoms of the initiator in the polyol are shifted from the corresponding carbon absorptions in the starting initiator, indicating that the alcohol hydroxy has initiated the polymerization.

### Example 10 (Not Inventive)

Ethyl glycolate (0.1561 g) and 2 mg of a zinc hexacyanocobaltate/t-butanol catalyst complex that has been treated with a 450 molecular weight poly(propylene oxide) triol are charged into dried Wheaton vial fitted with a stir bar. The vial is sealed with a septum cap and purged with nitrogen. About 0.5 g of ethylene oxide is added by syringe and the septum cap is replaced with a solid cap under nitrogen. The vial is sealed and heated and stirred at 90°C for 14 hours. C¹³ NMR analysis is consistent with the ester functionality remaining intact. The peaks attributable to the carbon atoms of the initiator in the polyol are shifted from the corresponding carbon absorptions in the starting initiator, indicating that the alcohol hydroxy has initiated the polymerization.

## Claims

1. A process for preparing a polyether having one or more halogen, aldehyde, ketone or nitro groups, comprising forming a mixture of a chlorinated brominated, aldehyde-containing, ketone-containing or nitro-containing initiator compound having one or more hydroxyl oxyalkylatable groups bound to an aliphatic carbon atom, at least one alkylene oxide and a metal cyanide catalyst complex and subjecting the mixture to conditions sufficient to activate the catalyst complex and to alkoxylate the oxyalkylatable groups of the initiator.

2. The process of claim 1 wherein the alkylene oxide is ethylene oxide, propylene oxide or 1,2-butylene oxide.

3. The process of claim 2 wherein at least three moles of alkylene oxide are added per equivalent of initiator, and the polydispersity of the product is less than about 1.25.

4. The process of claim 1 wherein the initiator compound is 2-chloroethanol, 2-bromoethanol, 2-chloro-1-propanol, 3-chloro-1-propanol, 3-bromo-1-propanol, 1,3-dichloro-2-propanol, 1-chloro-2-methyl-2-propanol.

5. The process of claim 1 wherein the initiator compound contains one or more nitro groups.

6. The process of claim 5 wherein the alkylene oxide is ethylene oxide, propylene oxide or 1,2-butylene oxide.

7. The process of claim 6 wherein at least three moles of alkylene oxide are added per equivalent of initiator, and the polydispersity of the product is less than about 1.25.

8. A poly(alkylene oxide) polymer containing the residue of an initiator compound containing at least one chlorine, bromine, aldehyde, ketone or nitro group, the polymer having an average alkoxy degree of polymerization of at least three moles of alkylene oxide per equivalent of initiator compound, wherein the alkylene oxide is bound to an aliphalic carbon on the residue of the initiator compound, and wherein the polymer is formed using a metal cyanide catalyst complex.

9. The polymer of claim 8 which contains, prior to any clean-up or purification, no more than 5 weight percent of by-products other than unreacted starting materials and a high molecular weight fraction.

10. A polymer of claim 9 wherein the alkylene oxide is ethylene oxide, propylene oxide or 1,2-butylene oxide.

11. A polymer of claim 10 wherein at least three moles of alkylene oxide are added per equivalent of initiator, and the polydispersity of the product is less than about 1.25.

12. A polymer of claim 11 wherein the initiator compound is 2-chloroethanol, 2-bromoethanol, 2-chloro-1-propanol, 3-chloro-1-propanol, 3-bromo-1-propanol, 1,3-dichloro-2-propanol, 1-chloro-2-methyl-2-propanol.

13. A polymer of claim 9 wherein the initiator compound contains one or more nitro groups.

14. A process comprising forming a mixture of a halogenated initiator compound having one or one oxyalkylatable groups, at least one alkylene oxide and a metal cyanide catalyst complex and subjecting the mixture to conditions sufficient to activate the catalyst complex and to alkoxylate the oxyalkylatable groups of the initiator to form a polyether containing at least one halogen group and at least one hydroxyl group, and then contacting said polyether with ammonia, a primary amine or a secondary amine under conditions sufficient to replace said halogen group with an amine group.

15. A process comprising forming a mixture of a nitro-containing initiator compound having one or one oxyalkylatable groups, at least one alkylene oxide and a metal cyanide catalyst complex and subjecting the mixture to conditions sufficient to activate the catalyst complex and to alkoxylate the oxyalkylatable groups of the initiator to form a polyether containing at least one nitro group and at least one hydroxyl group, and then subjecting said polyether to conditions sufficient to reduce said nitro group to an amine group.

## Patentansprüche

1. Verfahren zur Herstellung eines Polyethers mit einer oder mehreren Halogen-, Aldehyd-, Keton- oder Nitrogruppen, umfassend das Erzeugen einer Mischung aus einer chlorierten, bromierten, Aldehyd-enthaltenden, Keton-enthaltenden oder Nitro-enthaltenden Initiatorverbindung mit einer oder mehreren an ein aliphatisches Kohlenstoffatom gebundenen veretherbaren Hydroxylgruppen, wenigstens einem Alkylenoxid und einem Metallcyanidkatalysatorkomplex und das Aussetzen der Mischung gegenüber Bedingungen, die ausreichend sind, um den Katalysatorkomplex zu aktivieren und die veretherbaren Gruppen des Initiators zu verethern.

2. Verfahren nach Anspruch 1, wobei das Alkylenoxid Ethylenoxid, Propylenoxid oder 1,2-Butylenoxid ist.

3. Verfahren nach Anspruch 2, wobei wenigstens drei Mol Alkylenoxid pro Äquivalent des Initiators zugegeben werden und die Polydispersität des Produkts weniger als etwa 1,25 beträgt.

4. Verfahren nach Anspruch 1, wobei die Initiatorverbindung 2-Chlorethanol, 2-Bromethanol, 2-Chlor-1-propanol, 3-Chlor-1-propanol, 3-Brom-1-propanol, 1,3-Dichlor-2-propanol, 1-Chlor-2-methyl-2-propanol ist.

5. Verfahren nach Anspruch 1, wobei die Initiatorverbindung eine oder mehrere Nitrogruppen enthält.

6. Verfahren nach Anspruch 5, wobei das Alkylenoxid Ethylenoxid, Propylenoxid oder 1,2-Butylenoxid ist.

7. Verfahren nach Anspruch 6, wobei wenigstens drei Mol Alkylenoxid pro Äquivalent des Initiators zugegeben werden und die Polydispersität des Produkts weniger als etwa 1,25 beträgt.

8. Poly(alkylenoxid)polymer, enthaltend den Rest einer Initiatorverbindung, die wenigstens eine Chlor-, Brom-, Aldehyd-, Keton- oder Nitrogruppe enthält, wobei das Polymer einen mittleren Alkoxypolymerisationsgrad von wenigstens drei Mol Alkylenoxid pro Äquivalent der Initiatorverbindung aufweist, wobei das Alkylenoxid an einen aliphatischen Kohlenstoff des Restes der Initiatorverbindung gebunden ist, und wobei das Polymer unter Verwendung eines Metallcyanidkatalysatorkomplexes gebildet ist.

9. Polymer nach Anspruch 8, das vor einer Reinigung oder Aufreinigung nicht mehr als 5 Gewichtsprozent an anderen Nebenprodukten als nichtumgesetzte Ausgangsmaterialien und eine Fraktion mit hoher Molekülmasse enthält.

10. Polymer nach Anspruch 9, wobei das Alkylenoxid Ethylenoxid, Propylenoxid oder 1,2-Butylenoxid ist.

11. Polymer nach Anspruch 10, wobei wenigstens drei Mol Alkylenoxid pro Äquivalent des Initiators zugegeben sind und die Polydispersität des Produkts weniger als etwa 1,25 beträgt.

12. Polymer nach Anspruch 11, wobei die Initiatorverbindung 2-Chlorethanol, 2-Bromethanol, 2-Chlor-1-propanol, 3-Chlor-1-propanol, 3-Brom-1-propanol, 1,3-Dichlor-2-propanol, 1-Chlor-2-methyl-2-propanol ist.

13. Polymer nach Anspruch 9, wobei die Initiatorverbindung eine oder mehrere Nitrogruppen enthält.

14. Verfahren, umfassend das Erzeugen einer Mischung aus einer halogenierten Initiatorverbindung mit einer oder mehreren veretherbaren Gruppen, wenigstens einem Alkylenoxid und einem Metallcyanidkatalysatorkomplex und das Aussetzen der Mischung gegenüber Bedingungen, die ausreichend sind, um den Katalysatorkomplex zu aktivieren und die veretherbaren Gruppen des Initiators zu verethern, um einen Polyether, enthaltend wenigstens eine Halogengruppe und wenigstens eine Hydroxylgruppe, zu erzeugen, und dann das Inkontaktbringen des Polyethers mit Ammoniak, einem primären Amin oder einem sekundären Amin unter Bedingungen, die ausreichend sind, um die Halogengruppe durch eine Amingruppe zu ersetzen.

15. Verfahren, umfassend das Erzeugen einer Mischung aus einer Nitro-enthaltenden Initiatorverbindung mit einer oder mehreren veretherbaren Gruppen, wenigstens einem Alkylenoxid und einem Metallcyanidkatalysatorkomplex und das Aussetzen der Mischung gegenüber Bedingungen, die ausreichend sind, um den Katalysatorkomplex zu aktivieren und die veretherbaren Gruppen des Initiators zu verethern, um einen Polyether, enthaltend wenigstens eine Nitrogruppe und wenigstens eine Hydroxylgruppe, zu erzeugen, und dann das Aussetzen des Polyethers gegenüber Bedingungen, die ausreichend sind, um die Nitrogruppe in eine Amingruppe zu reduzieren.

## Revendications

1. Procédé de préparation d'un polyéther comportant un ou plusieurs groupes halogène, aldéhyde, cétone ou nitro, comprenant la formation d'un mélange d'un composé initiateur chloré, bromé ou contenant un groupe aldéhyde, cétone ou nitro ayant un ou plusieurs groupes hydroxyle susceptibles de subir une oxyalkylation liés à un atome de carbone aliphatique, d'au moins un oxyde d'alkylène et d'un complexe catalyseur à base de cyanure métallique et le fait de soumettre le mélange à des conditions suffisantes pour activer le complexe catalyseur et pour alcoxyler les groupes susceptibles de subir une oxyalkylation de l'initiateur.

2. Procédé selon la revendication 1, dans lequel l'oxyde d'alkylène est l'oxyde d'éthylène, l'oxyde de propylène ou l'oxyde de 1,2-butylène.

3. Procédé selon la revendication 2, dans lequel au moins trois moles d'oxyde d'alkylène sont ajoutées par équivalent d'initiateur, et la polydispersité du produit est inférieure à environ 1,25.

4. Procédé selon la revendication 1, dans lequel le composé initiateur est le 2-chloroéthanol, le 2-bromoéthanol, le 2-chloro-1-propanol, le 3-chloro-1-propanol, le 3-bromo-1-propanol, le 1,3-dichloro-2-propanol, le 1-chloro-2-méthyl-2-propanol.

5. Procédé selon la revendication 1, dans lequel le composé initiateur contient un ou plusieurs groupes nitro.

6. Procédé selon la revendication 5, dans lequel l'oxyde d'alkylène est l'oxyde d'éthylène, l'oxyde de propylène ou l'oxyde de 1,2-butylène.

7. Procédé selon la revendication 6, dans lequel au moins trois moles d'oxyde d'alkylène sont ajoutées par équivalent d'initiateur, et la polydispersité du produit est inférieure à environ 1,25.

8. Polymère d'oxyde de polyalkylène contenant le résidu d'un composé initiateur contenant au moins un groupe chlore, brome, aldéhyde, cétone ou nitro, le polymère présentant un degré alkoxy moyen de polymérisation d'au moins trois moles d'oxyde d'alkylène par équivalent de composé initiateur, dans lequel l'oxyde d'alkylène est lié à un carbone aliphatique sur le résidu du composé initiateur, et dans lequel le polymère est formé au moyen d'un complexe catalyseur à base de cyanure métallique.

9. Polymère selon la revendication 8, contenant, préalablement à toute épuration ou purification, pas plus de 5 pour cent en poids de sous-produits autres que les matériaux de départ n'ayant pas réagi et une fraction de poids moléculaire élevé.

10. Polymère selon la revendication 9, dans lequel l'oxyde d'alkylène est l'oxyde d'éthylène, l'oxyde de propylène ou l'oxyde de 1,2-butylène.

11. Polymère selon la revendication 10, dans lequel au moins trois moles d'oxyde d'alkylène sont ajoutées par équivalent d'initiateur, et la polydispersité du produit est inférieure à environ 1,25.

12. Polymère selon la revendication 11, dans lequel le composé initiateur est le 2-chloroéthanol, le 2-bromoéthanol, le 2-chloro-1-propanol, le 3-chloro-1-propanol, le 3-bromo-1-propanol, le 1,3-dichloro-2-propanol, le 1-chloro-2-méthyl-2-propanol.

13. Polymère selon la revendication 9, dans lequel le composé initiateur contient un ou plusieurs groupes nitro.

14. Procédé comprenant la formation d'un mélange d'un composé initiateur halogéné comportant un ou plusieurs groupes susceptibles de subir une oxyalkylation, d'au moins un oxyde d'alkylène et d'un complexe catalyseur à base de cyanure métallique et le fait de soumettre le mélange à des conditions suffisantes pour activer le complexe catalyseur et pour alcoxyler les groupes susceptibles de subir une oxyalkylation de l'initiateur pour former un polyéther contenant au moins un groupe halogène et au moins un groupe hydroxyle, puis la mise en contact dudit polyéther avec de l'ammoniaque, une amine primaire ou une amine secondaire dans des conditions suffisantes pour remplacer ledit groupe halogène par un groupe amine.

15. Procédé comprenant la formation d'un mélange d'un composé initiateur contenant un groupe nitro et comportant un ou plusieurs groupes susceptibles de subir une oxyalkylation, d'au moins un oxyde d'alkylène et d'un complexe catalyseur à base de cyanure métallique et le fait de soumettre le mélange à des conditions suffisantes pour activer le complexe catalyseur et pour alcoxyler les groupes de l'initiateur susceptibles de subir une oxyalkylation pour former un polyéther contenant au moins un groupe nitro et au moins un groupe hydroxyle, puis le fait de soumettre ledit polyéther à des conditions suffisantes pour réduire ledit groupe nitro en un groupe amine.
